(19) Europäisches Patentamt

European Patent Office

Office européen des brevets

(11) **EP 4 019 181 A1**

(12) **EUROPEAN PATENT APPLICATION**

(43) Date of publication:
**29.06.2022  Bulletin 2022/26**

(51) International Patent Classification (IPC):
***B23K 26/16*** *(2006.01)*

(21) Application number: **20216511.4**

(52) Cooperative Patent Classification (CPC):
**B23K 26/16**

(22) Date of filing: **22.12.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Raylase GmbH
82234 Wessling (DE)**

(72) Inventor: **Ghadimi, Reza
82229 Seefeld (DE)**

(74) Representative: **Lucke, Andreas
Boehmert & Boehmert
Anwaltspartnerschaft mbB
Pettenkoferstrasse 22
80336 München (DE)**

(54) **MAGNETIC TRAP STRUCTURE FOR A LASER MODULE**

(57)     The invention refers to a laser module structure (10) for a laser module (50) comprising a housing (12) for receiving at least one laser deflection system therein and a magnetic trap structure (30) arranged around a laser-transparent window (14) of the housing (12) and configured for capturing debris particles (202) of a laser-processed work material such that the captured debris particles (202) do not reach and/or cross the laser-transparent window. The invention further refers to a laser module structure arrangement (60) comprising first and second mutually attachable laser module structures according to the invention, to a laser module incorporating a laser module structure according to the invention and to a method of laser-processing a work material using a laser module comprising using a laser module structure according to the invention for capturing debris particles (202) of the laser-processed work material.

Fig. 3

EP 4 019 181 A1

**Description**

FIELD OF THE INVENTION

The present invention is in the field of laser processing of materials, in particular of metal materials. The invention refers to the use of a magnetic trap structure for capturing debris particles while laser-processing a work material with a laser module, in particular to a laser module structure, a modular laser module arrangement and a laser module incorporating such magnetic trap structure.

BACKGROUND OF THE INVENTION

The use of lasers for the industrial manufacturing of metals is nowadays ubiquitous, a significant example being additive manufacturing processes (3D printing), cutting, ablating, marking, engraving and, most notably, welding. In such processes, one or more laser beams are focused to desired positions on of a workpiece or work material to be laser-processed on a work field by means of laser deflection systems, which typically comprise optical lenses and mirrors for directing the laser beams.

Due to the very high beam intensities that are applied to the work material, in particular at the focal point of the respective laser beams, the interaction of the laser beams with the work material can result in the uncontrolled ejection of debris particles of the work material. Such debris particles are sometimes referred to as "weld spatter" or "weld beads". When the laser beam hits the surface of the work material, a sudden increase in the temperature of the material is caused. The upper material layers immediately absorb a high proportion of the laser energy and can materially detach from the rest of the material without having enough time to cool down and bond with the underlying material. Gas bubbles can form in lower material layers, which eject the detached particles vertically upwards. The degree to which debris particles are produced when laser-processing a work material in a laser module depends on the absorption of the laser energy at the surface of the work material and on the settings of the laser light and deflection parameters being used.

The hot debris particles released in this process can spread throughout the working volume of the laser module at high speeds and may reach the optical components of the laser module, such as the laser deflection systems, thereby damaging them and/or reducing their effectiveness. For this reason, some laser deflection systems are designed to prevent the penetration of debris particles into the interior of a laser module by means of a special protective cover, which is dust-tightly mounted on the window through which the laser beams are directed to the working field. However, any protection cover interposed on the optical path of the laser beams must be as neutral as possible in optical terms, in order to ensure that the properties and/or directions of the laser beams are not influenced, which would negatively affect the quality of the end product being laser-processed. Therefore, costly high-quality materials are used for the production of such protective covers, which can ensure sufficient optical neutrality, such as $SiO_2$ or ZnS substrates with special coatings. However, such protective covers are exposed to a constant bombardment with hot debris particles during operation of the laser module and debris particles can accumulate thereon, for which they must be regularly replaced, in some cases several times a day. The maintenance tasks required for the replacement and maintenance of such protective covers is highly time-consuming and requires regular production shutdowns, for which they necessarily lead to a reduction in productivity and a considerable increase in material and staff costs.

Thus, there is room for technical improvement in the field of laser modules for lase-processing materials regarding the protection of sensible optical components from the deteriorating effects of debris particles.

SUMMARY OF THE INVENTION

The present invention aims at providing a solution to the aforementioned disadvantages of the prior art and in particular aims at solving the problem of protecting the sensible optical components of a laser module from the negative effects of debris particles without compromising optical quality and further improving productivity and reducing costs as compared to previously known solutions. This problem is solved by a laser module structure for a laser module according to claim 1, by a laser module structure arrangement according to claim 12, by a laser module according to claim 14 and by a method of laser-processing a work material by a laser module according to claim 15. Preferred embodiments of the invention are defined in the dependent claims.

One aspect of the invention refers to a laser module structure for a laser module. The laser module structure comprises a housing configured for receiving at least one laser deflection system therein. A "housing" may refer herein in general to any closed body, preferably made of plastic or metallic material, used for defining a mostly closed volume, preferably a dust-tightly and/or fluid-tightly closed volume and configured for receiving optical and electromechanical components in said closed volume. The housing comprises at least one laser-transparent window that allows laser light to pass therethrough from and/or into the housing. The housing may comprise more than one laser-transparent windows that allow laser light to pass therethrough from and/or into the housing, wherein the laser-transparent windows may preferably be adjacent to each other, such that each two laser-transparent windows have at least a common edge. The housing may in particular comprise two or four such laser-transparent windows. However, reference will be made in the following to "the" laser-transparent window for simplicity.

One or more laser deflection systems may be received within the housing and may be configured for directing one more respective laser beams to and from an underlying work field through the at least one laser-transparent window. For example, two independent laser deflection systems may be received within the housing and may be configured for directing respective laser beams through a laser-transparent window for laser processing the work material and/or the workpiece.

A "laser deflection system" may comprise one or more optical mirrors for scanning a corresponding laser beam over an underlying work field and one or more optical lenses for focusing the corresponding laser beam, preferably on the underlying work field. A "laser deflection system" may further comprise electromechanical components allowing setting a position and/orientation of the one or more optical mirrors and/or the one or more optical lenses and a control unit configured to correspondingly control the operation of the electromechanical components and thereby the positioning and movement of the movable optical components. For example, the laser deflection system may comprise a rotatable X-mirror and a rotatable Y-mirror forming an XY-movable mirror system for deflecting the corresponding laser beam, one or more movable or fixed optical lenses for adjusting a focal position of the corresponding laser beam, a galvanometer for each of the X- and Y-mirrors and for each of the movable optical lenses and a control unit connected to each of the galvanometers for controlling their operation.

The housing may comprise one or more laser inputs for receiving laser light from one or more corresponding external laser sources to generate the one or more laser beams. However, laser sources configured for generating laser light corresponding to the one or more laser beams may also be installed within the housing.

The one or more laser beams may be directed through the laser-transparent window to an underlying work field for laser processing a workpiece or work material arranged on the work field. Further, laser light reflected at the workpiece or work material or laser-induced-emission from the workpiece or work material may (re-)enter the housing through the laser-transparent window and be processed, for example by a detection device, for obtaining information about the workpiece, the work material and/or the laser processing, i.e. for so-called "process monitoring". The laser-transparent window may hence be configured to allow the laser light of the one or more laser beams to pass therethrough when directed from the interior of the housing towards the work field for being used as laser-processing light and/or may be configured to allow the laser light of the one or more laser beams to pass therethrough when directed from the work field towards the interior of the housing for being used as detection light.

The laser-transparent window may be formed at a portion of an outer surface of the housing and is transparent to the laser light being deflected by the laser deflection systems received within the housing, such that the laser light can enter and exit the interior of the housing through the laser-transparent window. The laser-transparent window may for example be an open gap in the outer surface of the housing allowing the laser light to pass therethrough. The laser-transparent window may however be a gap in the outer surface of the housing covered with a material cover, for example a glass cover.

The laser module structure of the invention further comprises a magnetic trap structure. The magnetic trap structure comprises a frame structure and one or more magnets, preferably two or more magnets. The magnetic trap structure may be attached or attachable to the housing. The magnetic trap structure may in particular be removably attachable to the housing by means of removable attachment means, for example screws.

The frame structure of the magnetic trap structure is arranged or arrangeable on an outer side of the housing around a window area overlapping the laser-transparent window such that the laser-transparent window is exposed through the frame structure. The "window area" may refer herein to a projection of the laser-transparent window in a z-direction, wherein the z-direction maybe perpendicular to a plane defined by the laser-transparent window. Notably, the "plane defined by the laser-transparent window" may in general by a plane parallel to the laser-transparent window and to the window area. However, if the laser-transparent window is curved, for example outwardly convex, meaning that it occupies different positions in the z-direction, the "plane defined by the laser-transparent window" may correspond to a plane perpendicular to the z-direction and/or to a plane defined by a perimeter of the laser-transparent window. The window area may be substantially parallel to the laser-transparent window itself but may or may not be co-planar with the laser-transparent window in the z-direction. The window area may overlap with the laser-transparent window in the x- and y-directions (both being mutually perpendicular and perpendicular to the z-direction) and may or may not overlap with the laser-transparent window in the z-direction. The frame structure may be arranged or arrangeable on the exterior of the housing, such that an area around which the frame structure is arranged, which includes the window area, overlaps with the laser-transparent window, in particular in the x- and y-directions.

In some embodiments, the frame structure may be integrated in the housing and arranged around the laser-transparent window and at least partly coplanar with the laser-transparent window in the z-direction, such that the laser-transparent window may be formed as an opening through the frame structure. However, in some embodiments, the frame structure may be arranged on an outer surface of the housing covering the window area and hence overlapping in the xy-plane with the laser-transparent window (the xy-plane being perpendicular to the z-direction), but without being coplanar with the laser-transparent window in the z-direction, for example being arranged below the laser-transparent window, such that the frame structure is closer to an underlying work field than the laser-transparent window.

The laser-transparent window is exposed through the frame structure. Preferably, the laser-transparent window is completely exposed through the frame structure, such that no part of the laser-transparent window is optically obstructed by the frame structure. Laser light entering or exiting the laser module structure through the laser-transparent window may hence propagate freely through the frame structure, without being optically modified or distorted by the frame structure.

The frame structure may be attached or attachable to the housing, such that the magnetic trap structure may in particular be attached or attachable to the housing by the frame structure. The magnetic trap structure may in particular be removably attachable to the housing by means of removable attachment means, for example by means of screws. It is hence possible, according to the invention, to provide a magnetic trap structure as described herein to any pre-existing laser module.

Preferably, the frame structure may enclose the laser-transparent window completely and continuously. However, in some embodiments the frame structure may partially enclose the laser-transparent window for example having a U- or C-shaped profile around laser-transparent window such that the laser-transparent window is not enclosed by the frame structure from all sides or in all directions. The frame structure may preferably be a single piece of material. However, in other embodiments the frame structure may comprise different pieces of material.

The magnetic trap structure of the invention further comprises one or more magnets for generating a magnetic field, preferably a plurality of magnets, although configurations with a single magnet, in particular a single magnet having at least a piece-wise curved profile in the xy-plane, such as a U- or C-shaped profile in the xy-plane, are also possible. The one or more magnets are preferably arranged at and/or within the frame structure such that they do not obstruct the window area. For example, the one or more magnets may be received within frame structure, in particular such that they partially covered by the frame structure.

According to the invention, the frame structure is made of or at least comprises a soft magnetic material. As a skilled person knows, a "soft magnetic material" may refer herein in particular to a material having a very high intrinsic magnetic permeability $\mu$, i.e. having an intrinsic magnetic permeability much higher than the intrinsic magnetic permeability of vacuum $\mu_o$ or, in other words, a relative intrinsic magnetic permeability $\mu/\mu_o >> 1$, preferably $\mu/\mu_o > 100$ and more preferably $\mu/\mu_o > 1000$ or even $\mu/\mu_o > 10000$ and further having lower coercive force $H_c$ (0.002 Oersteds < He < 0.03 Oersteds) and/or low magnetic remanence, in particular a magnetic remanence below 1 T, preferably below 0.5 T.

In some embodiments, the soft magnetic material may be or comprise a ferromagnetic material, preferably one or more of an iron-silicon alloy, a nickel-iron alloy - in particular a so-called Permalloy, a Supermalloy and/or a $\mu$-metal - a soft ferrite and/or an amorphous polycrystalline or nanocrystalline alloy of iron, nickel and/or cobalt.

Further, according to the invention, the frame structure extends between the one or more magnets and the interior of the housing. Thus, at least a part of the frame structure, which comprises the soft magnetic material, extends between at least a part of each the one or more magnets and the interior of the housing. A virtual straight line extending from a respective one of the magnets to the interior of the housing crosses the frame structure. As a consequence, the frame structure acts as a magnetic shield preventing the magnetic field created by the one or more magnets to substantially reach the interior of the housing and hence prevents a magnetic interaction with the optical components that are arranged within the housing. For example, the galvanometers responsible for the rotation of the XY-mirrors and/or of the movement of any movable lenses, for example lenses of a focusing optical device, are thereby prevented from being magnetically distorted in their positioning and moving precision by the magnetic field, such that the accuracy of the laser-processing is not negatively affected.

In preferred embodiments, a side of the one or more magnets facing the interior of the housing may correspond to an uppermost side of the one or more magnets in the z-direction, i.e. in a direction perpendicular to a plane defined by the laser-transparent window and/or by the window area. In some embodiments, said side of the one or more magnets may face away from an underlying work field, in particular in the z-direction.

Due to the frame structure comprising a soft magnetic material, the magnetic field created by the one or more magnets is guided by the frame structure and is substantially confined to a volume not comprising the interior of the housing. The field lines of the magnetic field created by the one or more magnets are guided within the frame structure and may be closed around the frame structure without substantially reaching the interior of the housing. As a result, the magnetic field density within the housing due to the one or more magnets can be substantially supressed, or even practically vanish.

The magnetic interaction between the one or more magnets may further contribute to the creation of a spatially confined intense magnetic field. For example, if the one or more magnets comprise two mutually opposed bar magnets, their mutual magnetic interaction can contribute to spatially confining the resulting magnetic field to a window area extending therebetween and to increasing the magnetic flux density in said window area.

Further, according to the invention, the one or more magnets are configured such that the magnetic field is inhomogeneous at least in the window area. This implies that the number, magnitude (i.e. the amplitude of the generated magnetic field), material composition, spatial arrangement and magnetisation direction of the one or more magnets, which may be differently chosen for different embodiments, is chosen such that the magnetic field is inhomogeneous at least in the window area, i.e. such that the magnetic field has spatially varying direction and/or magnitude at least within the window area, preferably also in an area or volume underneath the window area. As will be shown below, there are different configurations and arrangements of the one or more magnets that allow generating an inhomogeneous magnetic field at least in the window area, all of them being accessible to the skilled person, and the invention covers them all without being restricted to any particular configuration as long as the requirement that the magnetic field be inhomogeneous at least in the window area is fulfilled. In some embodiments, the one or more magnets may comprise a plurality of magnets arranged according to a Halbach array configuration.

The magnetic field generated by the one or more magnets may further be inhomogeneous in other areas apart from the window area, in particular in a projection of the window area in the z-direction towards the work field and away from the laser-transparent window, i.e. in an area below the window area and overlapping with the window area arranged between the window area and the corresponding work field. Thus, the one or more magnets may further be configured such that the magnetic field is inhomogeneous in an area below the window area, in particular arranged between the window area and the corresponding work field.

As a result of the magnetic field being inhomogeneous at least in the window area, debris particles, in particular metallic debris particles and/or debris particles having a non-vanishing magnetic dipole moment $\vec{m}$, experience a force $\vec{F}$ when they enter or approach the window area. This force is in the direction of the gradient of the scalar product of the magnetic dipole moment with the magnetic field $\vec{B}$ that is generated by the one or more magnets (where * denotes the scalar product of two vector quantities):

$$\vec{F} = \nabla(\vec{m} * \vec{B}) \qquad (1)$$

As a result of this force, such debris particles are attracted towards the magnetic trap structure when they enter and/or approach the window area and can hence be "magnetically trapped" or deviated by the magnetic trap structure such that they do not reach or cross the laser-transparent window. Thus, the magnetic trap protects the laser-transparent window from erosion or contamination by such flying debris particles, thereby increasing their durability and life-cycle. As a result, the replacement and/or maintenance of the laser-transparent window can be performed at longer maintenance time intervals, whereby production shutdown times and costs can be reduced. Further, this solution comes with a number of additional advantages:
The uncontrolled dispersion of debris particles throughout the work volume and on the work material or workpiece being laser-processed is reduced by the effect of the magnetic trap structure, which leads to an improved production quality, for there are less debris particles interfering with the laser beams or the work material being processed by them.

In addition, since the laser-transparent window is exposed through the magnetic trap structure, in particular through the frame structure thereof, the magnetic trap structure does not optically affect the transmission of laser light through the laser-transparent window, for which there is no necessity for a recalibration of the laser deflection units each time the magnetic trap structure is exchanged or undergoes maintenance tasks.

The magnitude of the magnetic field that may ensure that a majority of debris particles are trapped and remain there due to the magnetic attraction, attached to the frame structure or one of the magnets.

According to preferred embodiments of the invention, the frame structure may overlap a side of the one or more magnets facing the interior of the housing. The frame structure may in particular completely overlap a side of the one or more magnets facing the interior of the housing. The frame structure may in particular be arranged directly on and/or in contact with the side of the one or more magnets facing the interior of the housing. Preferably, the interior of the housing may be completely separated from the one or more magnets by the frame structure, such that no virtual straight line could be drawn between one of the one or more magnets and the interior of the housing which does not cross the frame structure. Additionally or alternatively, the frame structure may overlap a side of the one or more magnets facing away from the window area. The frame structure may in particular completely overlap a side of the one or more magnets facing away from the window area. The frame structure may in particular be arranged directly on and/or in contact with the side of the one or more magnets facing away from the window area. Preferably, the window area may be separated from a coplanar surrounding area not overlapping the laser-transparent window by the frame structure. Either of these configurations by itself, and in particular both configurations in combination, can ensure an improved magnetic shielding effect of the frame structure with respect to the interior of the housing and further provides a more confined magnetic and further provide an improved confinement of the magnetic field, thereby reducing the magnetic field density outside of the frame structure and the window area and increasing the magnetic field density in the window area.

In some preferred embodiments of the invention, the one or more magnets may be exposed to the window area by the frame structure, preferably completely exposed. Thus, a side of the one or more magnets facing the window area may be not covered or overlapped by the frame structure. This configuration ensures that the magnetic field is not shielded in the direction of the window area and hence allows for stronger magnetic fields, i.e. for a stronger magnetic field density, at least in the window area, preferably also in an area below the window area. The one or more magnets may also be exposed by the frame structure to an area located below the window area and overlapping with the window area, such that the magnetic field also reaches downwards in the z-direction, towards the work field and may hence capture debris particles when they approach the window area from below.

In preferred embodiments of the invention, the one or more magnets may be received in the frame structure, preferably in one or more respective grooves formed in the frame structure. The one or more magnets maybe fixedly or removably attached to the frame structure. If the one or more magnets are received in the frame structure, the magnetic trap structure may have a particularly compact configuration and most or all of the previously mentioned advantageous configurations of the one or more magnets with respect to the frame structure can be easily implemented. The frame structure may comprise one or more grooves that are each designed to match the dimensions of the one or more magnets. For example, the frame structure may comprise as many grooves as there are magnets, wherein each of the magnets may be received in one of the grooves, in particular such that its sides facing the window area and facing below the window area are exposed by the frame structure whereas the sides of the magnet facing the interior of the housing and away from the window area are covered by the groove walls, i.e. by the frame structure.

In some preferred embodiments of the invention, at least some of the one or more magnets, preferably all of the one or more magnets, may have a magnetic dipole moment in a direction substantially parallel to a plane defined by the laser-transparent window, i.e. in a direction substantially perpendicular to the z-direction. Such configuration may provide a strong magnetic field with a greater gradient at least within the window area, possibly also beneath the window area, and hence improve the ability of the magnetic trap structure of trapping debris particles. As previously mentioned, the "plane defined by the laser-transparent window" may in general by a plane parallel to the laser-transparent window and to the window area. However, if the laser-transparent window is curved, the "plane defined by the laser-transparent window" may correspond to a plane perpendicular to the z-direction and/or to a plane defined by a perimeter of the laser-transparent window. Notably, the dipole moments of the one or more magnets need not be aligned with each other and need not point in the same direction. However, it may be advantageous that they are all parallel to the plane defined by the laser-transparent window. The dipole moments of the one or more magnets may point in different directions within the aforesaid plane such as to generate the inhomogeneous magnetic field at least in the window area, preferably also below the window area.

According to preferred embodiments of the invention, at least some of the one or more magnets, preferably all of the one or more magnets, may be permanent magnets. This has the advantage, as compared for example to the use of electromagnets, that no electrical connections are required for the generation of the magnetic field, which simplifies the structure and the handling of the magnetic trap structure, not only for manufacturing but also for example for installation, maintenance, exchange or removal. At least some or all of the one or more magnets may for example be permanent bar magnets and/or C- or U-shaped magnets.

In preferred embodiments of the invention, at least some of the one or more magnets, preferably all of the one or more magnets, comprises or is of a rare-earth magnetic material, preferably a rare-earth metal and/or an alloy thereof. At least some or all of the one or more magnets may preferably comprise neodymium (Nd), samarium-cobalt (SmCo) or an alloy thereof. For example, at least some or all of the one or more magnets may be NdFeB (an alloy of Nd) magnets or magnets made of SmCo or of an alloy of SmCo. Such material compositions of the one or more magnets allow generating very strong magnetic fields of up to 1 T or more.

According to some embodiments, the one or more magnets may be configured to generate a magnetic field, in particular in the window area and preferably also below the window area, having a magnitude, i.e. a magnetic flux density, of at least 0,1 T, preferably at least 0,3 T, most preferably at least 0,5 T. As previously mentioned, different configurations of the one or more magnets may allow reaching such magnetic field density values. In particular, the number, material composition, spatial arrangement and/or magnetic dipole moment orientation of the one or more magnets can be adjusted such as to properly adjust the magnetic field density in the window area. A magnetic field density with values in the aforementioned ranges is sufficient for a majority of applications for ensuring that debris particles having a magnetic dipole moment can be trapped and retained by the magnetic trap structure. The magnetic field generated by the one or more magnets can have a magnitude of at least 0,1 T, preferably at least 0,3 T, most preferably at least 0,5 T also outside the window area, in particular in areas surrounding the magnetic trap structure in directions in which the one or more magnets are exposed by the frame structure, for example in an area below the window area.

The appropriate magnetic field density or magnetic field magnitude for ensuring that at least a majority of debris particles approaching or reaching the window area are attracted and completely stopped by the magnetic trap structure such that the debris particles remain magnetically attached to the frame structure all the one or more magnets can be estimated based on a balance of energies, wherein the potential energy due to the magnetic interaction between the magnetic field and the dipole magnetic moment of a debris particle should exceed the corresponding kinetic energy of that debris particle

$$E_{kin} \leq E_{pot} \qquad\qquad (2)$$

wherein $E_{pot}$ is the potential energy due to the magnetic interaction of the magnetic dipole moment $\vec{m}$ of the debris particle with the magnetic field $\vec{B}$ created by the one or more magnets, given by

$$E_{pot} = -\vec{m} * \vec{B} = -m \cdot B \cdot \cos(\alpha), \qquad\qquad (3)$$

where $\alpha$ is the angle between the magnetic dipole moment $\vec{m}$ of the debris particle with the magnetic field $\vec{B}$ created by the one or more magnets. The magnitude of the magnetic dipole moment of the debris particle can be expressed as:

$$m = N_{atom} \cdot \mu_{atom} \cdot \mu_B \qquad\qquad (4)$$

with $N_{atom}$ being the number of atoms in the debris particle, $\mu_{atom}$ being an element-characteristic atomic magnetic moment (e.g. $\mu_{atom}$ = 2,2 for Fe, $\mu_{atom}$ = 1,72 for Co and $\mu_{atom}$ = 0,62 for Ni) and $\mu_B$ being the Bohr magneton constant. The skilled person is aware of the fact that the aforementioned exemplary values of the element-characteristic atomic magnetic moment refers to isolated atoms and that the atomic magnetic moment of clusterised atoms forming a debris particle are in general higher, for which the magnetic interaction between the debris particles and the magnetic field created by the one or more magnets can be even stronger. Further, the role played by gravitation was ignored in the above equations under the sensible assumption that it is negligible for the purposes of the invention, although the skilled person knows how to take it into account if necessary.

The kinetic energy of a debris particle can be expressed as

$$E_{kin} = \frac{1}{2}( N_{atom} \cdot m_{atom}) \cdot v^2 \qquad\qquad (5)$$

where $m_{atom}$ is the atomic mass and v the velocity of the moving debris particle.

Thus, from equation (2), an appropriate value of the magnetic field magnitude can be estimated as

$$B \geq \frac{m_{atom} \cdot v^2}{2 \cdot \mu_{atom} \cdot \mu_B}. \qquad\qquad (6)$$

In view of equation (6), and taking into account typical values of the velocity of debris particles during laser-processing by a laser module, which may be in the range of about 1 to 20 m/s, it can be seen that a magnetic field having a magnitude of at least 0,1 T, preferably at least 0,3 T, most preferably at least 0,5 T, will be appropriate for completely stopping and capturing at least a vast majority of debris is particles entering or approaching the magnetic field generated by the one or more magnets, in particular the window area, possibly all of them. Using the above equations, the skilled person is able to adapt the magnitude of the magnetic field generated by the one or more magnets to the material-dependent characteristics of a given work material being laser processed in the laser module as appropriate.

In preferred embodiments of the invention, the frame structure may enclose the window area completely, such that the frame structure is closed around the window area. Thus, the field lines of the magnetic field generated by the one or more magnets may be completely closed around the window area and within the frame structure, whereby an improved confinement of the magnetic field can be obtained and hence a reduced magnetic field density can be achieved in areas surrounding the magnetic trap structure in directions in which the one or more magnets are not exposed by the frame structure.

The at least one laser-transparent window of the laser module structure of the invention may have different shapes. The shape of the frame structure may correspond to the shape of the at least one laser-transparent window. For example, the at least one laser-transparent window may have a circular shape and the frame structure may have a circular ring shape for surrounding the circular transparent window. In other examples, the at least one laser-transparent window can have a square or rectangular shape and the frame structure may have a correspondingly square or rectangular shape (as seen in the xy-plane) for surrounding the square or rectangular laser-transparent window.

In some preferred embodiments of the invention, the laser module structure may further comprise one or more removable protection element for covering exterior surfaces of the at least one of the one or more magnets and/or of the frame structure, in particular at least exterior surfaces exposed to the window area and/or to an area below the window area. The one or more removable protection elements may be configured for being attached to the magnetic trap structure such that it covers the aforesaid surfaces. The one or more removable protection elements may preferably comprise or be of a paramagnetic material, preferably aluminium in order not to distort the magnetic field. The one or more removable protection elements may have a thickness of at least 0,2 mm, at least 0,5 mm or at least 1 mm. The one or more removable protection element may be used for covering surfaces of the magnetic trap structure which can be hit by flying debris particles and/or on which the debris particles can accumulate. The one or more removable protection element can thus protect the frame structure and/or the one or more magnets from erosion and contamination by the debris particles and further simplifies maintenance tasks of the laser module structure. Once a given degree of contamination and/or once a given amount of debris particles have accumulated on the removable protection element, the removable protection element can be removed for cleaning or exchanged by a replacement removable protection element. The one or more removable protection elements can comprise a removable protection layer or a removable protection plate attachable to the magnetic trap structure such that it covers the aforesaid surfaces. In some examples, the removable protection element can for instance be formed by one or more L-shaped aluminium plates configured for covering a surface of at least one of the magnets and/or of the frame structure facing the window area and for father covering an adjacent surface of said at least one of the magnets and/or of the frame structure facing down or away from the housing in the z-direction.

According to some embodiments, at least one of the one or more removable protection elements may further comprise and/or be connected or connectable to a sensor module configured for providing a measurement of a contamination level of the one or more removable protection elements. The sensor module may for example comprise an electrical resistance sensor system comprising a sheet of electrically insulating material and at least two pluralities of conductive elements, and a sensor configured for measuring an electrical resistance value (or a related electrical parameter) between one or more conductive elements of the first plurality of conductive elements and one or more - preferably neighbouring - conductive elements of the second plurality of conductive elements. The sensor may in particular be a voltmeter, a multimeter or an ohmmeter.

The sheet of electrically insulating material, which may for example comprise Teflon, may be arranged or attached on a surface of the corresponding removable protection element exposed to the window area and/or to a surrounding area (for example exposed to an area below the window area). The at least two pluralities of sensor module may be arranged on the sheer of electrically insulating material and may comprise two alternating pluralities of conductive elements, preferably of stripe-like conductive elements, that are alternatingly arranged on the sheet of electrically insulating material, preferably parallel to each other, such that - apart from the foremost and last conductive elements, each conductive element of the first plurality of conductive elements is arranged between two neighbouring conductive elements of the second plurality of conductive elements and vice versa, wherein each two conductive elements are mutually separated by the sheet of electrically insulating material.

When a protection element, for example an L-shaped aluminium plate, is completely contamination-free, the sensor measures an infinite resistance value between the first and second pluralities of conductive elements. As contaminating debris particles accumulate on the surface of the sheet of electrically insulating material between the conductive elements as they are magnetically captured by the magnetic field generated by the one or more magnets, they generate a partial or total shortcut between one or more neighbouring conductive elements, thereby reducing the electrical resistance value measured by the sensor, which decreases as a function of increasing contamination level, i.e. of increasing amount and/or size of the captured debris particles, in particular metallic debris particles or electrically conducting debris particles. Notably, the sensor module according to such embodiments of the invention has no significant effect upon the magnetic field generated by the one or more magnets.

The sensor module may further be configured for triggering a signal, for example a visual and/or acoustic signal, when the measured resistance value reaches or falls below a predetermined threshold, so as to report a predefined level of contamination, at which a replacement of the corresponding protection element may be recommendable.

According to preferred embodiments of the invention, at least two of the one or more magnets may be arranged on opposite sides of the laser-transparent window, such that a separation between the at least two of the one or more magnets substantially corresponds to an aperture of the laser-transparent window. "Aperture" may refer here in to a distance between opposite sides of the laser-transparent window. For example, if the laser-transparent window has a circular shape, the aperture of the laser-transparent window may correspond to its diameter, whereas if the laser-transparent window has a rectangular shape, the aperture may correspond to the width or to the length of the laser-transparent window. The magnitude of the magnetic field generated by the one or more magnets in the window area may decrease with increasing distance from the one or more magnets. The aperture of the at least one laser-transparent window may preferably be of at least 50 mm, more preferably of at least 70 mm. In such configurations, the distance from the one or more magnets does never become large enough for the magnetic field to lose its effectiveness for trapping debris particles.

In some preferred embodiments of the invention, the laser module structure may further comprise an aspiration device attached or attachable to the housing and/or to the magnetic trap structure and configured to trap debris particles by suction. The aspiration device may thereby allow trapping debris particles that could otherwise reach and/or cross the laser-transparent window, for example debris particles having a zero magnetic dipole moment or a relatively weak magnetic dipole moment. The aspiration device may complement and improve the ability of the magnetic trap structure to trap debris particles.

According to preferred embodiments of the invention, the at least one laser-transparent window may be a protection window, preferably a glass window or glass cover, in particular a coated glass window or glass cover. The at least one laser-transparent window may however also be the external surface of an f-theta-lens, which may be used for focusing a corresponding laser beam.

A further aspect of the invention refers to a laser module structure arrangement that comprises a first laser module structure and a second laser model structure. Each of the first and second laser model structures can be a laser model structure as defined for any of the previously described embodiments of the laser module structure according to the first aspect of the invention described herein. The first laser model structure comprises a first housing that is configured for receiving at least one laser deflection system and comprises at least one first laser-transparent window allowing laser light to pass therethrough from and/or into the first housing. The second laser module structure comprises a second housing that is configured for receiving at least one laser deflection system and comprises at least one second laser-transparent window allowing laser light to pass therethrough from and/or into the second housing. The first and second housings are mutually attached or attachable to each other. When the first and second housings are mutually attached, the at least one first laser-transparent window and the at least one second laser-transparent window are adjacent to each other and form a common laser-transparent window, i.e. a common surface that is transparent to laser light. In some embodiments, each of the first and second first laser module structures may comprise at least two laser deflection systems received in the corresponding housing.

The configuration and arrangement of the first and second housings of the laser module structure arrangement according to the present invention may in particular correspond to the configuration and arrangement of first and second housings of a "modular deflection system" as described in European patent application 20172491. The "common laser-transparent window" according to the present invention may correspond to the combination of the first to fourth "transparent windows" described in European patent application 20172491.

The laser module structure arrangement further comprises a magnetic trap structure as defined for any of the previously described embodiments of the invention but mounted around the common window area overlapping the common laser-transparent window instead of around a window area of a single housing. The magnetic trap structure comprises in particular a frame structure and one or more magnets for generating a magnetic field. The frame structure is arranged or arrangeable on an outer side of the first and second housings around the common window area such that the common laser-transparent window is exposed through the frame structure. The frame structure comprises or is made of a soft magnetic material and extends between the one or more magnets and the interior of at least one of the first and second housings. For example, for one of the magnets which is arranged in an area below the first housing, the frame structure may extend between that magnet and the interior of the first housing and for one of the magnets which is arranged in an area below the second housing, the frame structure may extend between that magnet and the interior of the second housing. In other examples, the frame structure may extend between the interior of the first and second housings and one of the magnets. Further, the one or more magnets are configured such that the magnetic field is inhomogeneous in the common window area.

The magnetic trap structure of this aspect of the invention provides the effects of magnetic trapping of debris particles that reach or approach the common window area and of magnetic shielding of the interior of the first and second housings with respect to the entire common window area.

According to some preferred embodiments, the frame structure of the laser module structure arrangement of the invention is a one-piece frame structure, in particular a frame structure made of a single piece of soft magnetic material, and is configured to enclose the common window area completely, for example by completely surrounding the common window area, such that the frame structure is closed around the common window area.

In some preferred embodiments, the frame structure of the laser module structure arrangement of the invention may however comprise a first portion and a second portion. The first portion may be arranged or arrangeable on an outer side of the first housing around a first window area overlapping the at least one first laser-transparent window such that the first laser-transparent window is exposed through the first portion of the frame structure. The first portion of the frame structure may enclose the first window area only partially, such that for example at least a side or portion of the perimeter of the first window area, which may in particular correspond to the side or portion of the perimeter of the first window area that is arranged adjacent to a corresponding side or portion of the perimeter of the second window area when the first and second housings are mutually attached, is not enclosed by the first portion of the frame structure. The second portion may be arranged or arrangeable on an outer side of the second housing around a second window area overlapping the at least one second laser-transparent window such that the second laser-transparent window is exposed through the second portion of the frame structure. As for the first portion, the second portion of the frame structure may enclose the second window area only partially, such that for example at least a side or portion of the perimeter of the second window area, which may in particular correspond to the side or portion of the perimeter of the second window area that is arranged adjacent to the corresponding side or portion of the perimeter of the first window area when the first and second housings are mutually attached, is not enclosed by the second portion of the frame structure. When the first and second housings are mutually attached and the first and second portions are respectively arranged around the first and second window areas, the first and second portions jointly form the frame structure and enclose the common window area. When the first and second housings are mutually attached the first and second portions may in particular be arranged in direct contact with each other.

A further aspect of the invention refers to a laser module for laser processing a workpiece comprising at least one laser module structure as defined for any of the previously discussed embodiments, in particular according to any of the embodiments of a laser module structure of the first aspect of the invention described herein or corresponding to any of the first or second laser module structures of a laser module structure arrangement according to the invention. The laser module according to this aspect of the invention further comprises one or more laser deflection systems received within the at least one housing of the at least one laser module structure. The one or more laser deflection systems are configured to deflect a corresponding laser beam through the at least one laser-transparent window of said at least one housing.

The one or more laser deflection systems may each comprise one or more optical mirrors for scanning a corresponding laser beam over an underlying work field and one or more optical lenses for focusing the corresponding laser beam, preferably on the underlying work field. The one or more laser deflection systems may each comprise electromechanical components allowing setting a position and/orientation of the one or more optical mirrors and/or the one or more optical lenses and a control unit configured to correspondingly control the operation of the electromechanical components and thereby the positioning and movement of the movable optical components. The one or more laser deflection systems may each comprise, in particular, a rotatable X-mirror and a rotatable Y-mirror forming an XY-movable mirror system for deflecting the corresponding laser beam, one or more movable or fixed optical lenses for adjusting a focal position of the corresponding laser beam, a galvanometer for each of the X - and Y-mirrors and for each of the movable optical lenses and a control unit connected to each of the galvanometers and stepper motors for controlling their operation.

Notably, the number of the at least one housing can be different from the number of the one or more laser deflection systems, i.e. one or more of the at least one housing may comprise more than one laser deflection system. For example, two laser deflection systems may be received within one housing and configured to deflect and focus a corresponding pair of laser beams through the corresponding laser-transparent window of said housing. In some preferred embodiments, the laser module may hence comprise at least two laser deflection systems received within one of the at least one housing of the laser module, wherein the at least two laser deflection systems may be configured to deflect and focus respective laser beams through the laser-transparent window of said at least one housing. In other examples, four laser deflection systems may be received within one housing and configured to deflect and focus four corresponding laser beams through the corresponding laser-transparent window of said housing.

A further aspect of the invention refers to a method of laser processing a work material using a laser module. The laser module used for laser processing the work material may in particular be a laser module comprising at least one laser module structure according to any of the previously discussed embodiments, in particular according to any of the embodiments of a laser module structure of the first aspect of the invention described herein or corresponding to any of the first or second laser module structures of a laser module structure arrangement according to the invention.

The method of the invention comprises laser processing the work material by one or more laser beams deflected by respective laser deflection systems. The one or more laser deflection systems are received within at least one housing of the laser module. The work material is arranged on a work field and the one or more laser beams are directed to and/or from the work field through at least one laser-transparent window of the at least one housing.

The method further comprises capturing debris particles of laser processed work material by a magnetic trap structure, such that the capture debris particles do not reach and/or across the at least one laser-transparent window. The magnetic trap structure may in particular be a magnetic trap structure as defined for any of the previously described embodiments of the invention. "Capturing" debris particles may refer herein to magnetically interacting with moving debris particles, in particular debris particles having a non-vanishing magnetic dipole moment and/or metallic debris particles, thereby deviating their trajectory, in particular magnetically attracting them towards the magnetic trap structure, such that they do not reach and/or cross the at least one laser-transparent window. Notably, metallic debris particles having no intrinsic magnetic dipole moment, for example debris particles comprising or consisting of copper, may also be captured according to the invention, for example due to Lenz's law.

The magnetic trap structure comprises a frame structure and one or more magnets for generating a magnetic field. The frame structure is arranged around window area overlapping the at least one laser-transparent window such that the laser-transparent window is exposed through the frame structure. The frame structure comprises or is made of a soft magnetic material and extends between the one or more magnets and the interior of the at least one housing. The one or more magnets are configured such that the magnetic field they generate is inhomogeneous at least in the window area, preferably also in an area below the window area.

Thus, the magnetic trap structure is used according to the method of the invention for providing the effects of magnetic trapping of debris particles that reach or approach the common window area while magnetically shielding the interior of the at least one housing.

The work material that is laser processed in the method of the invention may, according to some embodiments, be or comprise a metal, in particular a transition metal or alloy thereof. The work material may preferably be one or more of Fe, Ni, Co and/or an alloy thereof, in particular FeV, FeCr, FeMn, CoMn, NiMn, NiCr, NiCu and/or NiTi. When the work material has such composition, the debris particles have a magnetic dipole moment that allow for sufficient magnetic interaction between the debris particles and the magnetic trap structure, such that the debris particles can be captured by the magnetic trap structure and hence prevented from reaching and contaminating the at least one laser-transparent window and/or the interior of the housing.

BRIEF DESCRIPTION OF THE DRAWINGS

Fig. 1     shows a schematic side view of a laser module known from the prior art.

Fig. 2     shows a schematic bottom view of the laser module of Fig. 1.

Fig. 3     shows a schematic side view of a laser module according to some embodiments of the invention.

Fig. 4     shows a schematic bottom view of the laser module of Fig. 3.

Fig. 5     shows schematic perspective top and bottom views of a magnetic trap structure according to some embodiments of the invention. Fig 5a shows a perspective top view, while Figs. 5b and 5c show respective perspective bottom views.

Fig. 6     shows a schematic bottom view of the laser module of Figs. 2-5 and a diagram of the magnitude of the magnetic field generated therein.

Fig. 7     shows a schematic bottom view of a laser module according to other embodiments of the invention and a diagram of the magnitude of the magnetic field generated therein.

Fig. 8     shows a schematic bottom view of a laser module according to other embodiments of the invention.

Fig. 9     shows different views of a laser module structure arrangement according to some embodiments of the invention. Fig 9a shows a perspective top view, Fig. 9b shows a bottom view, and Fig. 9c shows a perspective bottom view.

DESCRIPTION OF PREFERRED EMBODIMENTS OF THE INVENTION

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

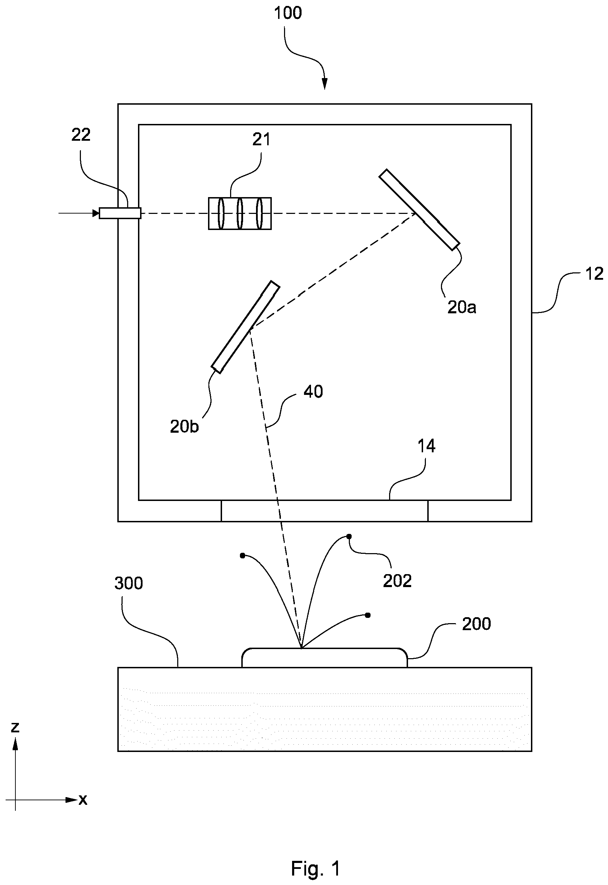

Figure 1 shows a schematic illustration of a laser module 100 according to solutions known from the prior art. The laser module 100 comprises a housing 12 that is configured for receiving therein a laser deflection system configured to deflect a laser beam 40 so as to scan it over an underlying working field 300, on which a work material 200 is arranged for being laser processed.

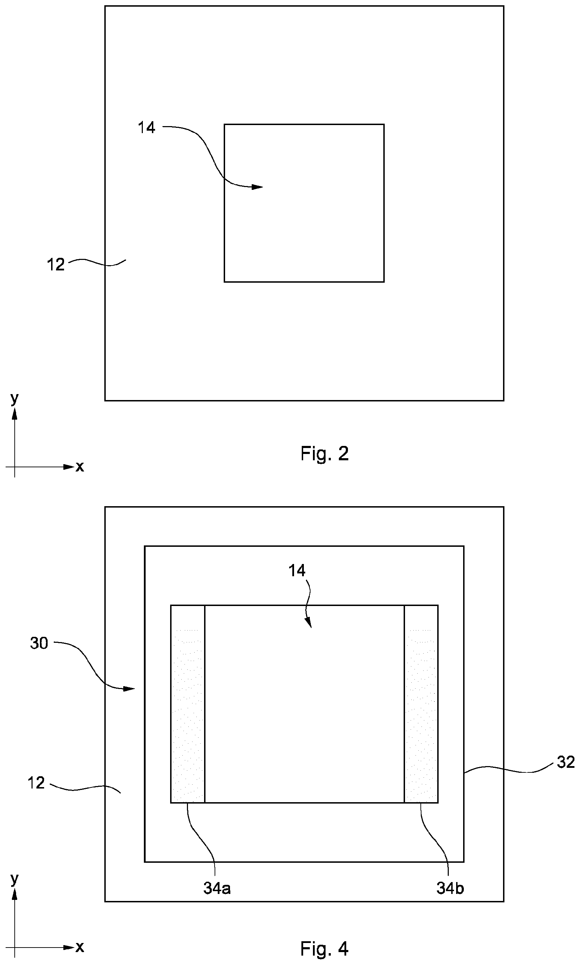

The housing 12 comprises a laser input 22 through which laser light generated by an external laser source enters the interior of the housing 12. The housing comprises a laser-transparent window 14 formed an outer surface of the housing 12 facing the work field 300. The laser-transparent window 14 is formed by an opening in said outer surface of the housing 12, as can be seen in the bottom view of Fig. 2, which is covered by a protective cover glass. The laser-transparent window 14 of the exemplary laser module shown in Fig. 1 and 2 has a quadrangular shape and forms a quadrangular opening in the housing 12 covered by the protective cover glass.

The laser-transparent window 14 is transparent to the laser beam 40. The laser deflection system, which comprises a focusing device 21 including movable and fixed lenses and an XY-mirror laser scanning system formed by a first movable mirror 20a and a second movable mirror 20b, is configured for deflecting the laser beam 40 through the laser-transparent window 14 of the housing 12 for laser processing the work material 200 by scanning the laser beam 40 over the work field 300.

The focusing device 21 may for example comprise one fixed lens and two movable lenses, which can be displaced by corresponding galvanometers (not shown). The movable mirrors 20a and 20b can be rotated by corresponding galvanometers (not shown). The galvanometers governing the movement of the moving lenses and of the movable mirrors 20a, 20b of the focusing device 21 can be controlled by a control unit (not shown) that is operatively connected thereto and/or can be manually set.

Due to the high beam intensities that are applied to the work material 200 by the laser beam 40, i.e. to the high laser energy densities of the laser beam 40, the interaction of the laser beam 40 with the work material 200 results in the uncontrolled ejection of hot debris particles 202 of the work material 200 that fly in all directions, mainly vertically upwards from the work field 300 towards the laser-transparent window 14, and may reach and damage and/or contaminate the laser-transparent window 14. Due to the erosion and contamination caused by the debris particles 202, it is necessary to frequently clean or replace the cover glass covering the laser-transparent window 14 in order to avoid a reduction of the laser processing quality that can be achieved with the laser module 100.

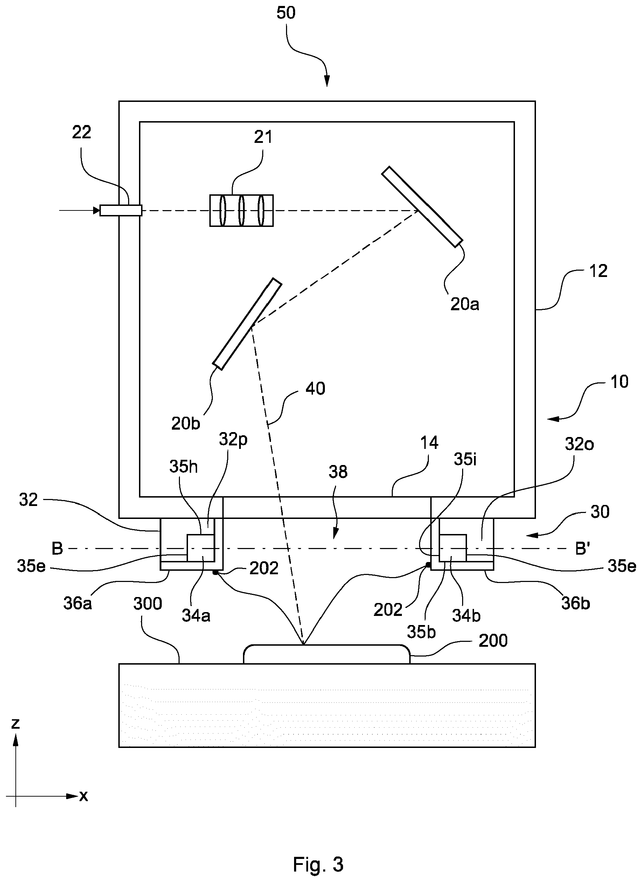

Fig. 3 shows a schematic illustration of a laser module 50 according to some embodiments of the present invention which comprises all of the elements discussed above for the exemplary laser module 100 of Fig. 1, for which the same reference numerals are used and which are not discussed again for brevity. The laser module 50 comprises a laser module structure 10 comprising the housing 12 a magnetic trap structure. The main difference between the laser module 50 according to the invention shown in Fig. 3 and the exemplary laser module 100 shown in Fig. 1 is the presence of the magnetic trap structure 30, which is removably attached to the housing 12, for example by means of screws (not shown).

In the embodiment shown in Fig. 3, only one laser deflection system, comprising the focusing device 21 as well as the movable mirrors 20a and 20b, is received in the housing 12 and configured for scanning the laser beam 40 through the laser-transparent window 14. However, in other embodiments, more than one laser deflection system, for example two of them, can be received in the housing 12 and be configured to scan a corresponding laser beam through the laser-transparent window 14, wherein each of the laser deflection systems can comprise a respective focusing device 21 and a respective pair of movable mirrors 20a, 20b as well as corresponding sets of galvanometers.

In the embodiment shown in Fig. 3, laser light is generated in the exterior of the laser module 50 by a laser light source and is fed into the laser module 50 through the laser input 22. However, in other embodiments, the laser light for the laser beam 40 may be generated by an internal laser source arranged within the housing 12.

The magnetic trap structure 30 comprises a frame structure 32 made of $\mu$-metal and two permanent bar N52 neodymium magnets 34a and 34b. Fig. 4 shows a bottom view of the laser module structure 10 of Fig. 3 in the xy-plane corresponding to the cut line BB'. As seen in Fig. 4, the bar magnets 34a and 34b extending longitudinally in the y-direction.

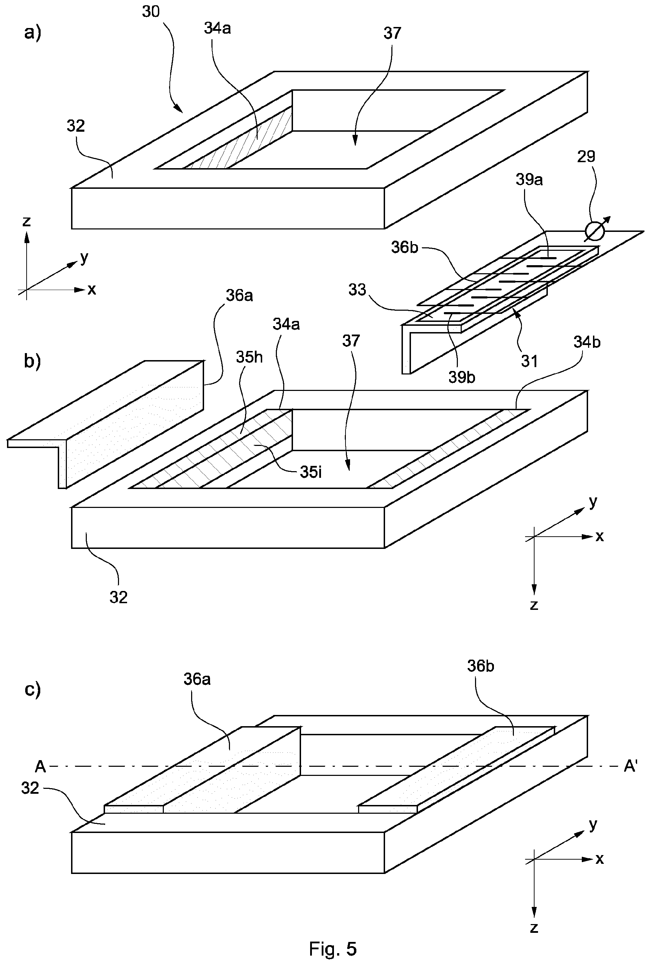

The magnetic trap structure 30 of Figs. 3 and 4 is shown in more detail in isolation, i.e. before being attached to the housing 12, in Fig. 5, which is to be considered in combination with Fig. 3 and 4 for a better understanding.

As seen in the perspective top view of Fig. 5a, the frame structure 32 of the embodiment shown in Fig. 3 to 5 has a quadrangular form and is closed around a central opening 37, which is adapted in size and shape to the laser-transparent window 14 of the laser module structure 10 of the laser module 50. In the embodiment shown in Figs. 3 to 5, the laser-transparent window 14 has a quadrangular shape, for which also the frame structure 32 and the central opening 37 it defines have a corresponding square shape. However, the shape and size of the central opening 37 of the frame structure 32 may have different shapes and sizes in other embodiments of the invention corresponding to different shapes and sizes of the laser-transparent window 14 of the housing 12 to which it can be adapted.

Fig. 5a shows a top perspective view of the magnetic trap structure 30 corresponding to the orientation of the frame structure 32 when it is attached to the housing 12. When the frame structure 32 is attached to the lower outer surface of the housing 12, as illustrated in Fig. 3, for example by means of screws, the frame structure 32 is arranged such that the central opening 37 of the frame structure 32 overlaps with the laser-transparent window 14 in the xy-plane, despite possibly being in a different position in the z-direction, as is the case in the embodiment under consideration. The laser-transparent window 14 is hence completely exposed through the frame structure 32, such that the laser beam 40 is not optically obstructed by the magnetic trap structure 30.

As can be seen in Fig. 3, in the embodiment shown, the frame structure 32, in particular the central opening 37 it defines (see Fig. 5), is not coplanar with laser-transparent window 14 in the z-direction, since the frame structure 32 is arranged in the z-direction in a lower position, i.e. closer to the work field 300 and further away from the interior of the housing 12 as compared to the laser-transparent window 14. However, in other embodiments, the frame structure, in particular the central opening 37 it defines, can be at least partly coplanar with the laser-transparent window 14 in the z-direction, for example if the frame structure 32 is integrated within the housing 12.

As seen in the bottom view of Fig. 4, when the magnetic trap structure 30 is attached to the housing 12, the laser-transparent window 14 remains exposed through the frame structure 32. As shown in Fig. 3, the frame structure is hence arranged around a window area 38, which is a region of space that overlaps the transparent window 14. In the embodiment shown, the window area 38 is a region of space located below the laser-transparent window 14 and overlapping with it in the xy-plane but not in the z-direction.

In the embodiment of Figs. 3 to 5, the frame structure 32 is configured to enclose the window area 38 completely, since it defines a continuous and closed body around the central opening 37. However, in other embodiments the frame structure may be a non-continuous body and hence be only partly closed around the central opening 37, in which case the frame structure 12 is configured to enclose the window area 38 partially.

In the embodiment represented in Fig. 3 to 5, the laser-transparent window 14 is covered by a cover glass. In other embodiments, the laser-transparent window 14 may correspond, instead of to a protective cover glass, to an external surface of an f-theta lens used for focusing the laser beam 40 therethrough.

The magnets 34a and 34b are received in the frame structure 32, each in a respective groove formed in the frame structure 32, wherein each of the grooves is adapted in shape and size to a respective one of the magnets 34a, 34b, as shown in Fig. 5b. For these reasons, only one of the magnets 34a is visible in the top perspective view of Fig. 5a, since the grooves of the frame structure 32 in which the magnets 34a and 34b are received are formed in the lower part of the frame structure 32, i.e. oriented towards the work field 300 when the frame structure 32 is attached to the housing 12.

Fig. 5b shows a bottom perspective view of the magnetic trap structure 30 corresponding to an inverted view with respect to the top perspective view shown in Fig. 5a. In this view, both magnets 34a and 34b are visible, as they are received in respective grooves formed in the lower part of the frame structure 32.

The magnets 34a and 34b are arranged on opposite sides of the frame structure 32. Thus, when the magnetic trap structure 30 is attached to the housing 12, the magnets 34a and 34b are arranged on opposite sides of the laser-transparent window 14 and a separation between the magnets 34a and 34b corresponds to an aperture of the laser-transparent window 14, which in the example under consideration is of about 70 mm.

The magnets 34a and 34b are exposed by the frame structure to the central opening 37, such that, when the magnetic trap structure 30 is attached to the housing 12, the magnets 34a and 34b are exposed by the frame structure 32 to the window area 38, as seen in Fig. 3. As seen in Fig. 3 and 5b, in the embodiment shown, two side faces of each of the magnets 34a and 34b, in each case a bottom side face 35b and an interior side face 35i, are exposed by the frame structure 32, while the frame structure 32 is arranged directly on each of the remaining (four) side faces (not shown in Fig. 4b) of each of the magnets 34a and 34b and in contact with.

When the magnetic trap structure 30 is attached to the housing 12 during use, the bottom face 35b of each of the magnets 34a and 34b faces down in the z-direction towards the work field 300 and to an area below the window area 38 being exposed by the frame structure 32. The interior face 35i of each of the magnets 34a and 34b faces the window area 38 in the x-direction. Further, as seen in Fig. 3, a side face 35h of each of the magnets 34a and 34b facing the interior of the housing 12 is overlapped and covered by the frame structure 32, such that the interior of the housing 12 is separated from each of the magnets 34a and 34b by a respective portion 32p of the frame structure 12 that extends between the corresponding one of the magnets 34a, 34b and interior of the housing 12. Meanwhile, a side 35e of each of the magnets 34a and 34b facing away from the window area 38 is also overlapped and covered by the frame structure 32, such that the window area 38 is separated, in particular in the x-direction as seen in Fig. 3, from a surrounding area that is co-planar with the window area 38 but does not overlap the laser-transparent window 14 by an outer portion 320 of the frame structure 32.

Thus, the magnetic field generated by the magnets 34a, 34b is shielded by the soft magnetic frame structure 32 towards the interior of the housing 12 (vertically upwards in Fig. 3) and also outwardly from the window area 38 (horizontally outwards in the x-direction from the window area 38 in Fig. 3). The frame structure 32 guides and confines the magnetic field generated by the magnets 34a, 34b in these directions, such that the magnetic field is not sensed in the interior of the housing 12 or in the aforesaid surrounding area that is co-planar with the window area 38 but does not overlap with the laser-transparent window 14 (and corresponds to the exterior of the magnetic trap structure 30).

Fig. 5b and 5c further show two removable protection elements configured as two L-shaped aluminium plates 36a and 36b having a thickness of about 0.2 mm, which are configured for being attached to the frame structure covering the exposed sides 35b and 35i of each of the magnets 34a and 34b and the sides of the frame structure 32 parallel thereto. In the view shown in Fig. 5b, the L-shaped aluminium plates 36a and 36b are in an unmounted state, i.e. removed from the magnetic trap structure 30. In the view shown in Fig. 5c, the L-shaped aluminium plates 36a and 36b are mounted attached to the magnetic trap structure 30. The cut line AA' indicated in Fig. 5c corresponds to the xz-plane shown in Fig. 3 (i.e. the cut line AA' coincides with or is parallel to the cut line BB'). Like Fig. 5b, Fig. 5c shows a bottom perspective view of the magnetic trap structure 30 corresponding to an inverted view with respect to the top perspective view shown in Fig. 5a.

As schematically shown in Fig. 5b for the aluminium plate 36b, at least one, possibly all, of the removable protection elements, in the case at hand the L-shaped aluminium plates 36a and 36b, can comprise a sensor module 31 for providing a measurement of a contamination level of the corresponding protection element 36b. The sensor module 31 comprises a Teflon sheet 33 arranged on the surface of the L-shaped aluminium plate 36b that faces down towards the work field 300. The sensor module 31 further comprising first and second pluralities of stripe-like conductive elements 39a, 39b that are alternatingly arranged in parallel. An ohmmeter 29 is connected between the conductive elements 39a of the first plurality and the conductive elements 39b of the second plurality and configured to provide a measurement value of the electrical resistance measured therebetween and to provide an output warning signal when the measured resistance value falls below a predefined threshold value, thereby signalling that a predefined level of contamination with debris particles has been reached and the corresponding protection element 36b should be replaced. In other embodiments, the sheet of insulating material 33 and the conductive elements 39a, 39b can also be arranged extending to more than one of the surfaces of the corresponding protection element 36b, for example on the two surfaces facing towards the work field 300 and towards the window area 38 (i.e. towards the central opening 37).

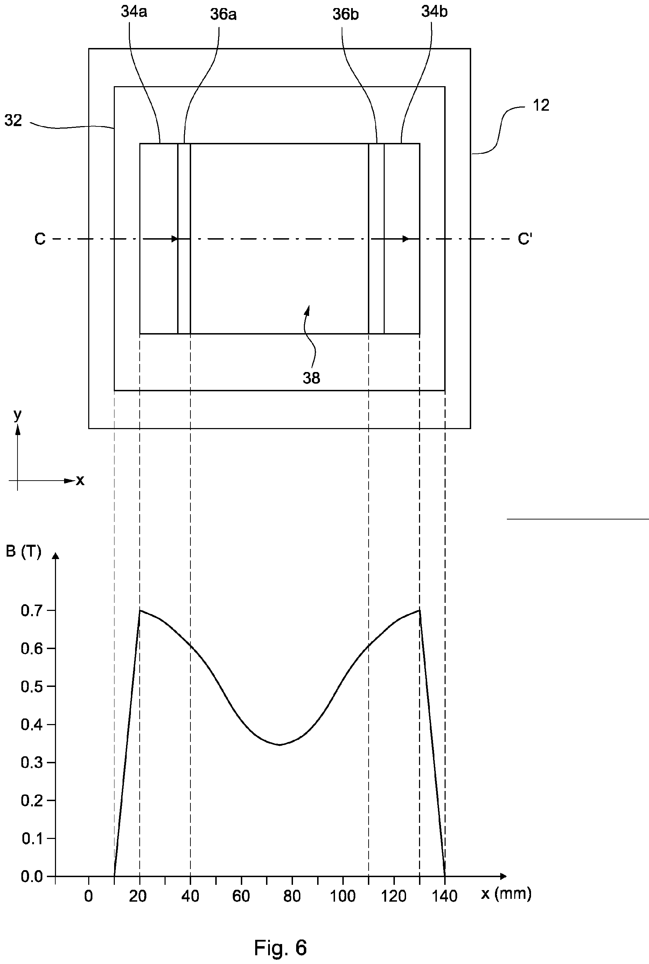

Fig. 6 shows a schematic bottom view of the laser module structure 10 of Figs. 3-5 corresponding to the cut line BB' indicated in Fig. 3. In the particular embodiment under consideration, the magnets 34a and 34b have a magnetic dipole moment in the xy-plane, i.e. in a direction parallel to a plane defined by the laser-transparent window and parallel to the laser-transparent window 14. The top image of Fig. 6 shows the structure of the magnetic trap structure 30 attached to the housing 12 from a bottom view. The frame structure 32 is arranged surrounding the window area 38. The magnetic dipole moment of the magnets 34a and 34b is respectively indicated with an arrow and points to the right in the x-direction.

The bottom image of Fig. 6 illustrates the magnitude of the magnetic field B generated by the magnets 34a, 34b, i.e. the magnetic flux density, as a function of position in the x-direction along the CC' cut line. The value of the magnetic flux density decreases as distance from one of the magnets 34a, 34b increases in the x-direction. Next to a respective one of the magnets 34a, 34b, the magnetic field has a magnetic flux density of about 0.6 T while in the middle of the window area 38, the magnetic field has a magnitude or magnetic flux density of about 0.35 T. Such values of the inhomogeneous magnetic field created by the magnets 34a, 34b in the window area 38 are for example sufficient for trapping metallic debris particles 202 of Fe, Co or Ni moving at a velocity of up to about 12 m/s and are hence suitable for ensuring that at least a vast majority of metallic debris particles 202 do not reach the laser-transparent window 14 in a broad range of laser-processing applications.

The laser module 50 described with reference to Figs. 3 to 6 can be used for carrying out a method of laser-processing the work material 200 by one or more laser beams like laser beam 40, each being scanned by a respective laser deflection system received within a corresponding housing like housing 12. Notably, more than one laser deflection system may be received within the same housing and configured for deflecting corresponding laser beams through the same laser-transparent window. The laser processed work material 200 can for example be Fe, Co, or Ni or an alloy thereof. Debris particles 202 of such material have a non-vanishing magnetic dipole moment and can be captured by the magnetic trap structure 30 when they move approaching or entering the window area 38 such that they do not reach and/or cross the laser-transparent window 14. Thereby, contamination and damaging of the laser-transparent window 14 can be avoided or at least reduced.

If necessary, the L-shaped plates 36a, 36b shown in Fig. 3 and 5 can be removed or replaced, for example once they are heavily contaminated with debris particles 202 attached thereto. Further, it is possible to easily remove or replace the entire magnetic trap structure 30.

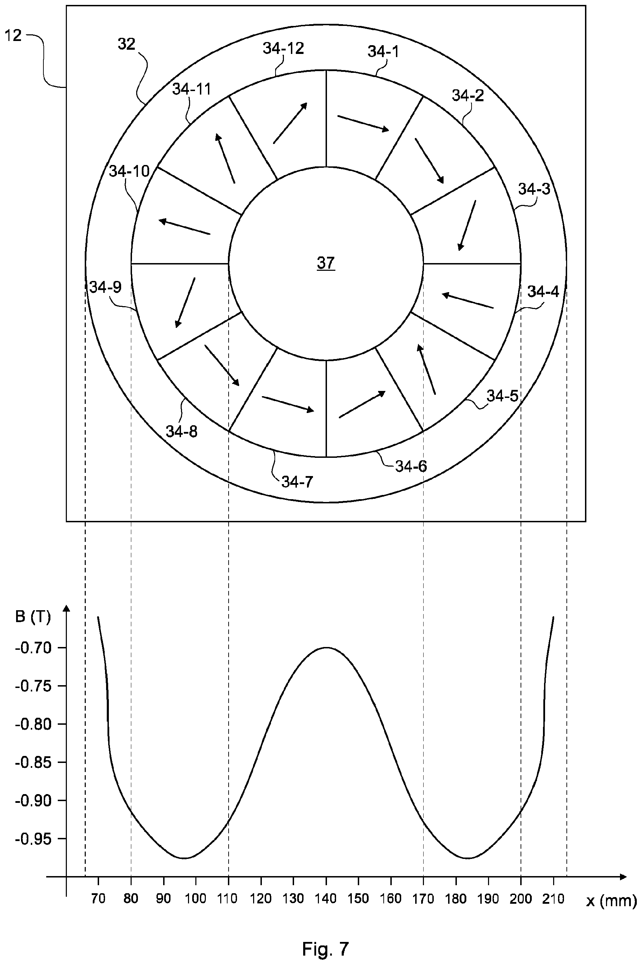

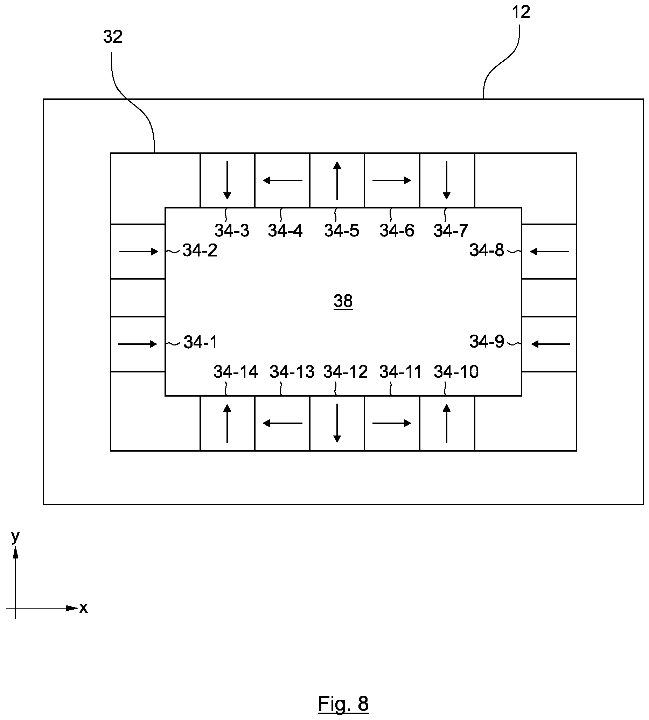

In the exemplary embodiment considered in Figs. 3-6, the magnetic trap structure 30 comprises two magnets 34a, 34b having magnetic dipole moments that point in the same direction (rightwards in the x-direction as seen in Fig. 6). However, as previously mentioned, a different number of magnets can be used in other embodiments of the invention, which can be differently arranged and have different orientations of their respective magnetic dipole moments. In particular, the number, material composition, spatial arrangement and/or magnetic dipole moment orientation of a plurality of magnets can be adapted to each particular application. Different corresponding embodiments of the invention are schematically shown in each of Fig. 7 and 8 as examples.

Fig. 7 shows in its top image a schematic bottom view of a magnetic trap structure with a frame structure 32 having a circular shape and comprising 12 N52 neodymium magnets 34-1, ..., 34-12 arranged around a circular central opening 37. The 12 magnets 34-1, ..., 34-12 are formed as circular segments arranged next to each other around the circumference of the frame structure 32. Although in the embodiment shown, the magnets 34-1, ..., 34-12 extend throughout the circular perimeter of the frame structure 32 and are arranged adjacent to each other, this needs not be the case in other embodiments, for example if a lower number of magnets is used or if the size of the individual magnets is reduced. The magnetic dipole moments of the 12 magnets 34-1, ..., 34-12 are all parallel to the xy-plane but point in different directions, according to a so-called Halbach array configuration, as indicated with respective arrows in Fig. 7. The bottom image of Fig. 7 is a plot of the magnetic flux density of the magnetic field generated by the 12 magnets 34-1, ..., 34-12 in the window area 38, i.e. in the opening 37. As seen in the bottom part of Fig. 7, this configuration of the 12 magnets 34-1, ..., 34-12 allows reaching (absolute) values of the magnetic flux density in the range 0,7 T - 0,9 T in a window area enclosed by the magnetic trap structure having an aperture (here diameter) of about 60 mm. The magnetic flux density goes to zero outside of the frame structure 32, i.e. to the left and to the right of the frame structure 32 in the x-direction.

Fig. 8 shows a schematic bottom view similar to the bottom view illustrated in Fig. 6 but for a configuration having 12 magnets that are distributed around the frame structure 32, having a spatial arrangement of the magnets and their magnetisations that is also suitable for creating in the window area 38 enclosed by the frame structure a strong inhomogeneous magnetic field according to the invention. The 12 magnets of the embodiment shown in Fig. 8 are also arranged according to a Halbach array configuration. The embodiment shown in Fig. 8 does not include any removable protection elements like the L-shaped aluminium plates 36a and 36b shown in Fig. 5.

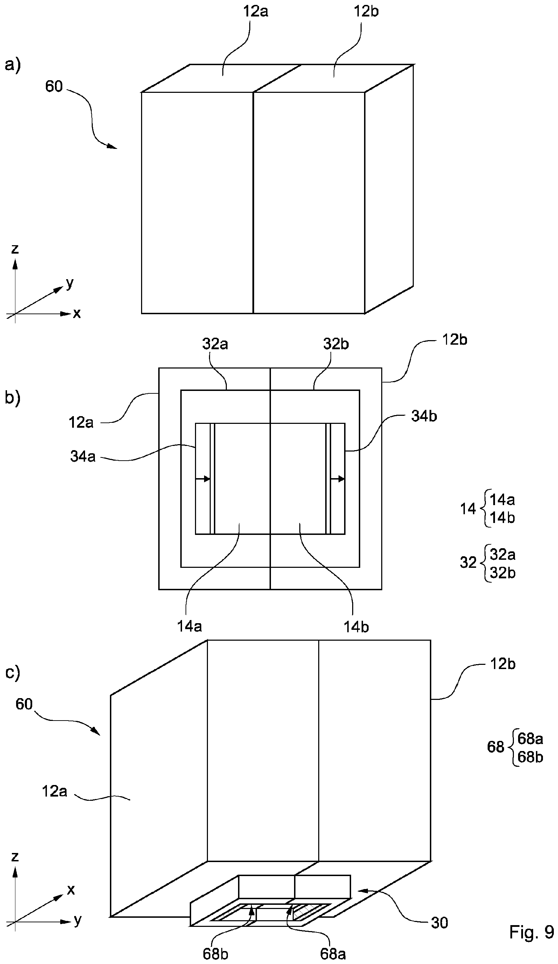

Fig. 9 shows schematic view of a laser module structure arrangement 60 that comprises first and second laser module structures, each of them being similar to the laser module structure 10 described above with respect to Figs. 1 to 6 and configured to receive at least one laser deflection system therein, for example two laser deflection systems configured for simultaneously scanning respective laser beams over a corresponding work field through a corresponding laser-transparent window. The first laser module structure comprises a first housing 12a and the second laser module structure comprises a second housing 12b. As seen in the top perspective view of Fig. 9a, the first and second housings 12a, 12b are configured for being attached to each other.

As shown in the bottom view of Fig. 9b and the bottom perspective view of Fig. 9c, the first housing 12a has a first laser-transparent window 14a and the second housing 12b has a second laser-transparent window 14b. When the first and second housings 12a and 12b are attached to each other, the first and second laser-transparent windows 14a and 14b are arranged adjacent to each other forming a common laser-transparent window 14.

As shown in the bottom view of Fig. 9b and the bottom perspective view of Fig. 9c, the laser module structure arrangement 60 further comprises a magnetic trap structure 30 according to the invention comprising a frame structure 32 that comprises a soft magnetic material and is arranged on an outer side of the first and second housings 12a, 12b around a common window area 68, overlapping the first and second laser-transparent windows 14a and 14b in the xy-plane. The first and second laser-transparent windows 14a and 14b are both exposed through the magnetic trap structure 30. The magnetic trap structure 30 of the laser module structure arrangement 60 comprises magnets 34a, 34b that are arranged and selected for generating in the common window area 68 an inhomogeneous magnetic field, as explained above.

In the embodiment shown in Fig. 9, the frame structure 32 comprises first and second C-shaped portions: a first portion 32a and a second portion 32b, which jointly form the frame structure 32 and enclose the common window area 68 when the first and second housings 12a and 12b are attached to each other. The first and second portions 32a, 32b can also be U-shaped in other examples. The first portion 32a is then adjacent to the second portion 32b. The common window area 68 is the combination of a first window area 68a overlapping the first laser-transparent window 14a and a second window area 68b overlapping the second laser-transparent window 14b. The first and second portions 32a, 32b are respectively arrangeable on an outer side of the first or second housing 12a, 12b around the first or second window area 68a, 68b, correspondingly.

Notably, in other embodiments, the frame structure 32 can be a one-piece frame structure configured to enclose the common window area 68 completely and being closed around it.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

**Claims**

1. A laser module structure (10) for a laser module (50), comprising:

 a housing (12) configured for receiving at least one laser deflection system, wherein the housing (12) comprises at least one laser-transparent window (14) allowing laser light to pass therethrough from and/or into the housing (12); and
 a magnetic trap structure (30) comprising:

 a frame structure (32) arranged or arrangeable on an outer side of the housing (12) around a window area (38) overlapping the at least one laser-transparent window (14) such that the laser-transparent window (14) is exposed through the frame structure (32), and
 one or more magnets (34a, 34b) for generating a magnetic field;
 wherein the frame structure (32) comprises a soft magnetic material and extends between the one or more magnets (34a, 34b) and the interior of the housing (12), and
wherein the one or more magnets (34a, 34b) are configured such that the magnetic field is inhomogeneous at least in the window area (38).

2. The laser module structure of claim 1, wherein the frame structure (32) overlaps a side (35h) of the one or more magnets (34a, 34b) facing the interior of the housing (12), wherein the frame structure (32) is preferably arranged directly on and/or in contact with the side (35h) of the one or more magnets (34a, 34b) facing the interior of the housing (12).

3. The laser module structure of claim 1 or 2, wherein the frame structure (32) overlaps a side (35e) of the one or more magnets (34a, 34b) facing away from the window area (38), in particular such that the window area (38) is separated from a coplanar surrounding area not overlapping the laser-transparent window (14) by the frame structure (32).

4. The laser module structure of any of the preceding claims, wherein the one or more magnets (34a, 34b) are exposed to the window area (38) by the frame structure (32).

5. The laser module structure of any of the preceding claims, wherein the one or more magnets (34a, 34b) are received in the frame structure (32), preferably in one or more respective grooves formed in the frame structure (32).

6. The laser module structure of any of the preceding claims, wherein at least some of the one or more magnets (34a, 34b), preferably all of the one or more magnets (34a, 34b), have a magnetic dipole moment in a direction substantially parallel to a plane defined by the laser-transparent window (14); and/or
wherein at least some of the one or more magnets (34a, 34b), preferably all of the one or more magnets (34a, 34b), are permanent magnets (34a, 34b).

7. The laser module structure of any of the preceding claims, wherein at least some of the one or more magnets (34a, 34b), preferably all of the one or more magnets (34a, 34b), comprises or is of a rare-earth magnetic material, preferably a rare-earth metal and/or an alloy thereof, wherein at least some or all of the one or more magnets (34a, 34b) preferably comprise neodymium, samarium-cobalt magnets and/or an alloy thereof; and/or
wherein the one or more magnets (34a, 34b) are configured to generate the magnetic field, in particular in the window area (38), having a magnetic flux density of at least 0,1 T, preferably at least 0,3 T, most preferably at least 0,5 T.

8. The laser module structure of any of the preceding claims, wherein the frame structure (32) encloses the window area (38) completely, such that the frame structure (32) is closed around the window area (38).

9. The laser module structure of any of the preceding claims, wherein the soft magnetic material is or comprises a ferromagnetic material, preferably one or more of an iron-silicon alloy, a nickel-iron alloy, in particular $\mu$-metal, Permalloy and/or Supermalloy, a soft ferrite and/or an amorphous polycrystalline or nanocrystalline alloy of iron, nickel and/or cobalt.

10. The laser module structure of any of the preceding claims, further comprising one or more removable protection elements (36a, 36b) for covering exterior surfaces of the at least one of the one or more magnets (34a, 34b) and/or of the frame structure (32), in particular exterior surfaces exposed to the window area (38) and/or to an area below the window area (38), wherein the one or more removable protection elements (36a, 36b) preferably comprise or are of a paramagnetic material and/or preferably have a thickness of at least 0,2 mm or at least 1 mm;
wherein at least one of the one or more removable protection elements preferably comprises and/or is connected or connectable to a sensor module configured for providing a measurement of a contamination level of the one or more removable protection elements.

11. The laser module structure of any of the preceding claims, wherein at least two of the one or more magnets (34a, 34b) are arranged on opposite sides of the laser-transparent window (14), such that a separation between the at least two of the one or more magnets (34a, 34b) substantially corresponds to an aperture of the laser-transparent window (14), wherein the aperture preferably is of at least 20 mm or at least 50 mm, more preferably at least 70 mm.

12. A laser module structure arrangement (60) comprising:

a first laser module structure for a laser module comprising a first housing (12a), wherein the first housing (12a) is configured for receiving at least one laser deflection system and comprises at least one first laser-transparent window (14a) allowing laser light to pass therethrough from and/or into the first housing (12a);

a second laser module structure for a laser module comprising a second housing (12b), wherein the second housing (12b) is configured for receiving at least one laser deflection system and comprises at least one second laser-transparent window (14b) allowing laser light to pass therethrough from and/or into the second housing (12b);

wherein the first and second housings (12a, 12b) are mutually attached or attachable to each other, wherein when the first and second housings (12a, 12b) are mutually attached, the at least one first laser-transparent window (14a) and the at least one second laser-transparent window (14b) are adjacent to each other and form a common laser-transparent window (14);

wherein the laser module structure arrangement (60) further comprises:

a magnetic trap structure (30) comprising:

a frame structure (32) arranged or arrangeable on an outer side of the first and second housings (12a, 12b) around a common window area (68) overlapping the common laser-transparent window (14) such that the common laser-transparent window (14) is exposed through the frame structure (32); and

one or more magnets (34a, 34b) for generating a magnetic field, and

wherein the frame structure (32) comprises a soft magnetic material and extends between the one or more magnets (34a, 34b) and the interior of at least one of the first and second housings (12a, 12b), and

wherein the one or more magnets (34a, 34b) are configured such that the magnetic field is inhomogeneous in the common window area (68).

**13.** The laser module structure arrangement of claim 12, wherein the frame structure (32) is a one-piece frame structure (32) configured to enclose the common window area (68) completely, such that the frame structure (32) is closed around the common window area (68); or

wherein the frame structure (32) comprises a first portion (32a) and a second portion (32b);

wherein the first portion (32a) is arranged or arrangeable on an outer side of the first housing (12a) around a first window area (68a) overlapping the at least one first laser-transparent window (14a) such that the first laser-transparent window (14a) is exposed through the first portion (32a) of the frame structure (32);

wherein the second portion (32b) is arranged or arrangeable on an outer side of the second housing (12b) around a second window area (68b) overlapping the at least one second laser-transparent window (14b) such that the second laser-transparent window (14b) is exposed through the second portion (32b) of the frame structure (32);

wherein, when the first and second housings (12a, 12b) are mutually attached and the first and second portions (32a, 32b) are respectively arranged around the first and second window areas (68a, 68b), wherein the first and second portions (32a, 32b) jointly form the frame structure (32) and enclose the common window area (68).

**14.** A laser module (50) for laser processing a workpiece, the laser module comprising:

at least one laser module structure (10) as defined in any of the preceding claims, and one or more laser deflection systems received within the at least one housing (12) of the at least one laser module structure and configured to deflect a corresponding laser beam through the at least one laser-transparent window (14) of said housing (12);

wherein the laser module (50) optionally comprises at least two laser deflection systems received within one of the at least one housing (12), wherein the at least two laser deflection systems are configured to deflect respective laser beams through the laser-transparent window (14) of said at least one housing (12).

**15.** A method of laser-processing a work material using a laser module, the method comprising:

laser-processing the work material (200) by one or more laser beams (40) deflected by respective laser deflection systems, wherein said respective laser deflection systems are received within at least one housing (12) of the laser module, wherein the work material (200) is arranged on a work field (300) and the one or more laser beams (40) are directed to and/or from the work field through at least one laser-transparent window (14) of the at least one housing (12), and

capturing debris particles (202) of the laser-processed work material by a magnetic trap structure (30) such that the captured debris particles (202) do not reach and/or cross the at least one laser-transparent window (14), wherein the magnetic trap structure (30) comprises:

a frame structure (32) arranged around a window area (38) overlapping the at least one laser-transparent window (14) such that the laser-transparent window (14) is exposed through the frame structure (32); and one or more magnets (34a, 34b) for generating a magnetic field,
wherein the frame structure (32) comprises a soft magnetic material and extends between the one or more magnets (34a, 34b) and the interior of the at least one housing (12), and
wherein the one or more magnets (34a, 34b) are configured such that the magnetic field is inhomogeneous in the window area (38);

wherein the work material (200) preferably is or comprises a metal, in particular a transition metal or an alloy thereof, preferably one or more of Fe, Ni, Co and/or an alloy thereof, in particular FeV, FeCr, FeMn, CoMn, NiMn, NiCr, NiCu and/or NiTi.

Fig. 1

Fig. 3

Fig. 2

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 20 21 6511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP H08 323491 A (MITSUBISHI HEAVY IND LTD) 10 December 1996 (1996-12-10) * abstract; figures 1,2 * ----- | 1-15 | INV. B23K26/16 |
| A | JP 2008 307573 A (IHI CORP) 25 December 2008 (2008-12-25) * abstract; figures 1-4 * ----- | 1-15 | |
| A | DE 10 2015 016674 A1 (FRAUENHOFER-GESELLSCHAFT ZUR FÖRDERUNG DER ANGEWANDTEN FORSCHUNG E V []) 22 June 2017 (2017-06-22) * paragraph [0031] - paragraph [0055]; figures 1-5b * ----- | 1-15 | |
| A | US 3 452 178 A (KLEEN WERNER) 24 June 1969 (1969-06-24) * column 3, line 45 - column 4, line 23; figures 3-4 * ----- | 1-15 | |

TECHNICAL FIELDS
SEARCHED (IPC)

B23K

The present search report has been drawn up for all claims

| Place of search | Date of completion of the search | Examiner |
|---|---|---|
| Munich | 8 June 2021 | De Backer, Tom |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 21 6511

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2021

| Patent document cited in search report | Publication date | Patent family member(s) | | Publication date |
|---|---|---|---|---|
| JP H08323491 A | 10-12-1996 | NONE | | |
| JP 2008307573 A | 25-12-2008 | NONE | | |
| DE 102015016674 A1 | 22-06-2017 | NONE | | |
| US 3452178 A | 24-06-1969 | CH | 423033 A | 31-10-1966 |
| | | FR | 1398313 A | 07-05-1965 |
| | | GB | 1057306 A | 01-02-1967 |
| | | NL | 6405742 A | 15-12-1964 |
| | | US | 3452178 A | 24-06-1969 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 20172491 A